**Europäisches Patentamt**

(19) **European Patent Office**

**Office européen des brevets**

(11) Numéro de publication: **0 194 191**

**B1**

(12) # FASCICULE DE BREVET EUROPÉEN

(45) Date de publication du fascicule du brevet:
**12.07.89**

(51) Int. Cl.⁴: **C 01 G 25/02**

(21) Numéro de dépôt: **86400368.6**

(22) Date de dépôt: **21.02.86**

(54) Zircone stabilisée, son procédé de préparation et son application dans des compositions céramiques.

(30) Priorité: **01.03.85 FR 8503023**

(43) Date de publication de la demande:
**10.09.86 Bulletin 86/37**

(45) Mention de la délivrance du brevet:
**12.07.89 Bulletin 89/28**

(84) Etats contractants désignés:
**AT BE CH DE FR GB IT LI LU NL SE**

(56) Documents cité:
**CH-A-540 855**
**FR-A-1 571 187**
**FR-A-2 143 781**
**US-A-3 645 910**

**Le dossier contient des informations techniques présentées postérieurement au dépôt de la demande et ne figurant pas dans le présent fascicule.**

(73) Titulaire: **RHONE- POULENC CHIMIE, 25, quai Paul Doumer, F-92408 Courbevoie Cédex (FR)**

(72) Inventeur: **Colombet, Jean- François, 17, Boulevard Richelieu, F-92500 Rueil Malmaison (FR)**
Inventeur: **Magnier, Claude, 3, Rue des Chaufourniers, F-75019 Paris (FR)**

(74) Mandataire: **Cazes, Jean- Marie, RHONE- POULENC INTERSERVICES Service Brevets Chimie 25, quai Paul Doumer, F-92408 Courbevoie Cédex (FR)**

EP 0 194 191 B1

## Description

L'invention concerne un procédé de préparation d'une poudre fine de zircone stabilisée, les zircones ainsi obtenues et leurs applications dans des compositions céramiques pour l'obtention de bonnes propriétés mécaniques, thermomécaniques et électriques.

Les zircones stabilisées et en particulier les zircones stabilisées à l'yttrium, au magnésium, au calcium ou au cérium sont des matériaux très utilisés dans la préparation de compositions céramiques.

On connaît différentes méthodes de préparation de zircone stabilisée. En particulier, il est connu, d'après la demande de brevet japonais n° 57-191 234 d'opérer la précipitation par l'ammoniaque d'une solution de sel de zirconium et d'un sel du composé stabilisant, séparation du précipité, puis addition d'un solvant organique après distillation à reflux le produit désiré est ensuite séché et fritté.

Un tel procédé présente plusieurs inconvénients.

Notamment, ce procédé nécessite la mise en oeuvre d'une étape d'addition de solvant et de distillation qui s'avère coûteuse et délicate à mettre en oeuvre sur le plan industriel.

La présente invention vise a fournir un procédé de fabrication de zircone stabilisée qui ne nécessite pas l'étape de mise en oeuvre d'un solvant et de distillation subsequente et qui donc obvie aux inconvénients inhérents à une telle étape.

Un autre but visé par la présente invention est de fournir une zircone stabilisée présentant une microstructure homogène et régulière et dont la densité mesurée après frittage 4 heures à une température inférieure ou égale à 1500°C soit supérieure ou égale à 99 % de la densité théorique de la zircone désirée.

La présente invention permet d'obtenir une poudre très fine de zircone stabilisée et qui est obtenue avec une excellente reproductibilité. Cette poudre, qui est uniformément homogène au niveau microscopique, est particulièrement adaptée à la fabrication de produits céramiques.

Ces objectifs sont atteints par le procédé de préparation de la poudre fine de zircone stabilisée selon l'invention qui est caractérisé en ce qu'il comporte les étapes suivantes:

- on mélange, d'une part un sol d'hydrate de zircone présentant un pH compris entre 0,5 et 5 et constitué de cristallites élémentaires de $ZrO_2$ aciculaires de tailles comprises entre 10 et 500 Å, agglomérés en amas submicromiques ayant des tailles de 100 à 5000 Å et, d'autre part, une solution d'un sel du composé stabilisant;
- on opère ensuite le sèchage de la suspension obtenue;
- le produit séché est calciné à une température comprise entre 700°C et 1300°C pendant un temps compris entre 30 mn et 24h;
- on opère éventuellement le broyage de la poudre obtenue.

Le sol d'hydrate de zircone présentant un pH compris entre 0,5 et 5 et constitué de cristallites élémentaires de $ZrO_2$ aciculaires ($ZrO_2$ monoclinique) de tailles comprises entre 10 et 500 Å, agglomérées en amas submicroniques ayant des tailles de 100 et 5000 Å peut être obtenu par toute technique appropriée et en particulier par hydrolyse à chaud d'une solution de chlorure ou nitrate de zirconyle à une température comprise entre 140 et 300°C et de préférence entre 150°C et 200°C la concentration de la solution de chlorure ou de nitrate de zirconyle étant de préférence comprise entre 0,1 et 2 moles/l exprimée en $ZrO_2$.

Dans un mode de mise en oeuvre qui n'est pas préféré, la suspension d'hydrate de zircone peut également être préparé par hydrolyse à chaud d'une solution sulfurique de zirconium, en milieu nitrique ou en milieu chlorhydrique à une température comprise entre 80 et 150°C et de préférence vers 90°C, le rapport molaire $SO_3/ZrO_2$ de la solution sulfurique de zirconium étant compris de préférence entre 0,34 et 1 et sa concentration variant de préférence de 0,1 à 2 moles/l exprimée en $ZrO_2$.

Le sulfate basique de zirconium obtenu est ensuite neutralisé par une base, de préférence l'ammoniaque, jusqu'à l'obtention d'un pH d'environ 8 on lave puis on disperse ensuite le gel obtenu par ajout d'une solution d'acide nitrique, le pH du milieu de dispersion étant de préférence compris entre 0,5 et 5.

Selon le procédé de l'invention, le sol d'hydrate de zirconium est mélangé avec une solution d'un sel du composé stabilisant. On utilise de préférence une solution de nitrate du composé stabilisant. Le composé stabilisant est choisi de préférence parmi le groupe constitué par l'yttrium, le calcium, le magnésium et le cérium.

Le mélange entre le sol d'hydrate de zirconium et la solution du sel du composé stabilisant est effectué de façon à ce que la teneur en composé stabilisant de la zircone stabilisée varie de 0,001 à 30 % molaire et de préférence de 2 à 10 % molaire et plus particulièrement entre 2 et 3 % lorsque le composé stabilisant est l'yttrium.

A l'issue de l'étape d'introduction de la solution du sel du composé stabilisant, on obtient une suspension parfaitement homogène de l'hydrate de zirconium dans la solution du sel de composé stabilisant.

La suspension ainsi obtenue contient environ 1 à 25 % de matière sèche. Elle doit ensuite être séchée.

Ce sèchage pourra se faire par tout moyen connu, notamment par atomisation, c'est-à-dire par pulvérisation de la solution dans une atmosphère chaude.

Préférentiellement, on réalise ce sèchage dans un réacteur "flash", par exemple du type mis au point par la demanderesse et décrit notamment dans les brevets français n° 2 257 326, 2 419 754, 2 431 321. Dans ce cas, les gaz sont animés d'un mouvement hélicoïdal et s'écoulent dans un puits-tourbillon. La suspension est injectée suivant une trajectoire confondue avec l'axe de symétrie des trajectoires hélicoïdales des gaz ce qui permet de transférer parfaitement la quantité de mouvement des gaz aux particules de cette suspension. Par ailleurs, le temps de séjour des particules dans le réacteur est extrêmement faible, il est inférieur à 1/10 de seconde, ce qui supprime tout risque de surchauffe par suite d'un contact trop long avec les gaz.

Selon les débits respectifs des gaz et de la suspension, la température d'entrée des gaz est comprise entre 400 et 900°C, la température du solide séché entre 100 et 500°C et de préférence entre 120 et 200°C.

On obtient un produit sec présentant une granulométrie de l'ordre de quelques Microns, comprise entre 1 et 10 microns par exemple.

Le produit sec est ensuite calciné.

La calcination est opérée à une température comprise entre 700 et 1300°C et de préférence entre 800 et 1050°C. La durée de la calcination peut varier entre 30 minutes et 24 heures par exemple et de préférence de 2 à 8 heures.

A la suite de cette calcination, on obtient une poudre de zircone stabilisée présentant une granulométrie macroscopique de 1 à 10 Microns environ centrée sur un diamètre moyen de préférence proche de 2 microns, les grains de 1 à 10 $\mu$m étant constitués de cristallites élémentaires ou d'amas submicroniques de taille de 100 à 3000 Å environ.

Les produits obtenus peuvent, si nécessaire, être broyés de préférence en milieu humide pour obtenir, après sèchage, des poudres constituées de cristallites élémentaires d'une dimension comprise entre 100 et 3000 Å et de préférence entre 200 et 1000 Å. La répartition granulométrique de la poudre est telle que le diamètre moyen se situe alors entre environ 0,10 et 2 microns.

L'évolution de la température et du temps de calcination corrélé avec la dimension des particules permet de dégager les tendances suivantes plus la température de calcination est basse, plus il est nécessaire d'augmenter le temps de calcination plus la température de calcination est élevée, plus le temps peut diminuer.

Les caractéristiques de la poudre de zircone stabilisée sont déterminées de la façon suivante:

On mélange la poudre de zircone stabilisée avec un liant en proportion pondérale de 3 %, ce liant étant choisi parmi les liants bien connus dans la technique, par exemple le Rhodoviol 4/20R.

Le mélange est pastillé, sous une pression de 4T/cm2. On procède au frittage. La vitesse de montée en température est de 5°C/mn lorsque l'on a atteint la température de frittage, qui est inférieure à 1500°C et généralement comprise entre 1300 et 1500°C, on reste 4 heures à cette température et l'on laisse refroidir, on obtient alors une céramique de zircone stabilisée dont la densité atteint au moins 99 % de la densité théorique de la zircone stabilisée considérée.

Les poudres de zircone stabilisée selon l'invention sont utilisables pour obtenir de bonnes propriétés mécaniques, thermomécaniques ou électriques des céramiques et notamment dans la fabrication des supports et creusets utilisés à haute température, dans les sondes à oxygène, dans les pièces d'usure ou d'adiabatisation des moteurs ou des outils selon des procédés et dans des formulations connues dans ces domaines etc.

D'autres avantages et aspects de l'invention apparaîtront à la lecture des exemples qui suivent.

**Exemple 1**

On part de 3333 g d'une solution de nitrate de zirconyle à 3,7 % en poids en $ZrO_2$.

La solution est chauffée à 150°C durant 24 heures.

On obtient alors un produit composé de particules de taille comprise entre 500 et 1000 Å. Ces particules sont des agglomérats formés de cristallites aciculaires élémentaires de 200 Å sur 30 Å, sous la forme monoclinique de $ZrO_2$.

La suspension est centrifugée et l'hydrate de zirconium remis en suspension dans l'eau. Les particules sont alors bien dispersées dans le milieu et ne décantent pas le pH du sol est de 1,5.

On mélange ensuite le sol de zircone à 100 g d'une solution de nitrate d'yttrium (11 % en $Y_2O_3$). La quantité d'yttrium est calculée pour obtenir une poudre de zircone contenant 3 molaire en $Y_2O_3$.

Le mélange est ensuite séché dans un réacteur "flash" décrit dans les brevets français n° 2 257 326, 2 419 754 et 2 431 321. La température d'entrée des gaz est de 550°C, la température du solide séché de 150°C.

On obtient alors 163,5 g de produit séché. Il est constitué d'agglomérats sphériques de granulométrie comprise entre 1 et 10 $\mu$.

Le produit est ensuite calciné à 800°C durant 3 heures.

La vitesse de montée en température est de 10°C/mn.

On obtient alors 122,6 g de $ZrO_2$ stabilisés par 3 % molaire de $Y_2O_3$.

L'analyse cristallographique révèle la présence d'une solution solide homogène $Zr_{0,942}\,Y_{0,058}\,O_{1,97}$ et le produit est composé d'agglomérats contenant des aggrégats de cristallites de taille comprise entre 300 et 900 Å.

La taille des domaines de cohérence cristalline est d'environ 130 Å.

Le frittage de la poudre de zircone yttriée s'effectue après pastillage sous une pression de 4t/cm2.

La densité après frittage à 1300°C durant 4 heures (vitesse de montée en température de 5°C/mn) est supérieure à 99 % de la densité théorique.

## Exemple 2

Les conditions de préparation du sol de zircone, de mélange avec le nitrate d'yttrium, de teneur en yttrium/ZrO$_2$ et de séchage sont identiques à celles de l'exemple 1.

Le produit est alors calciné à 900°C durant 3 heures (vitesse de montée de la température = 10°C/mn).

On obtient alors une poudre de zircone yttriée contenant des aggrégats de cristallites de taille comprise entre 300 et 900 Å et les qualités de la poudre de l'exemple 1 sur le plan de l'homogénéité chimique.

La taille des domaines de cohérence cristalline est d'environ 180 Å.

Le produit est ensuite broyé. La répartition granulométrique de la poudre entièrement submicronique est alors centrée vers 0,1 µm.

Après passage de la poudre sous 4t/cm$^2$ et frittage à 1300°C durant 4 heures, la densité de la céramique est supérieure à 99 % de la densité théorique.

## Exemple 3

Les conditions de préparation du sol de zircone de mélange avec le nitrate d'yttrium, de teneur en yttrium par rapport à ZrO$_2$ et de séchage sont identiques à celles de l'exemple 1.

Le produit est alors calciné à 1000°C durant 3 heures (vitesse de montée en température = 5°C/mn).

On obtient alors une poudre de zircone yttriée composée d'agglomérats contenant des aggrégats de cristallites de taille voisine comprise entre 400 Å et 900 Å et possèdant les qualités de la poudre de l'exemple 1 sur le plan de l'homogénéité chimique.

La taille des domaines cristallins est d'environ 250 Å.

Le produit est ensuite broyé. La granulometrie de la poudre totalement submicronique est centrée vers 0,15 µm.

Après passage de la poudres sous 4t/cm$^2$ et frittage à 1300°C durant 3 heures, la densité de la céramique est supérieure à 99 % de la densité théorique.

## Exemple 4

On part de 3333 g d'une solution de chlorure de zirconyle à 3,7 % en ZrO$_2$. La solution est chauffée à 150°C durant 24 heures. On obtient alors un produit composé de particules de taille comprise entre 600 et 1200 Å. Ces particules sont des agglomérats de cristallites circulaires élémentaires d'environ 180 sur 30 Å et sous la forme monochimique de ZrO$_2$.

La suspension est neutralisée par l'ammoniaque jusqu'à pH 8 puis lavée par filtration. Le gâteau est alors redispersé dans l'eau puis peptisé par HNO$_3$ jusqu'à l'obtention d'un sol de pH 2.

On mélange ensuite le sol de zircone à 100 g d'une solution de nitrate d'yttrium (11 % en Y$_2$O$_3$). La quantité d'yttrium est calculée pour obtenir une poudre de zircone contenant 3 % molaire en Y$_2$O$_3$.

Les conditions de séchage et de calcination sont identiques à celles de l'exemple 1.

On obtient alors une poudre de zircone yttriée possédant les qualités de la poudre de l'exemple 1 sur le plan de l'homogénéité chimique. Pressée sous 4t/cm$^2$, la poudre, après frittage à 1300°C durant 3 heures (vitesse de montée en température = 5°C/mn) densifie à plus de 99 % de la densité théorique.

## Exemple 5

Les conditions d'obtention du sol, de mélange avec le nitrate d'yttrium, de teneur en yttrium par rapport au ZrO$_2$ et de séchage sont identiques à celles de l'exemple 4.

La poudre séchée est alors calcinée à 900°C durant 3 h (vitesse de montée en température = 5°C/mn).

Après broyage, on obtient une poudre totalement submicronique, avec une population centrée vers 0,1 µm. La taille des cristallites est comprise entre 500 et 1000 Å avec des domaines de cohérence cristalline de l'ordre de 200 Å et les qualités de la poudre de l'exemple 1 sur le plan de l'homogénéité chimique.

Pressée sous 4t/cm$^2$, la poudre, après frittage à 1300°C durant 3 heures (vitesse demoncée en température = 5 °C/mn) densifie à plus de 99 % de la densité théorique.

## Exemple 6

On part de 5000 g d'une solution sulfurique de nitrate de zirconyle (SO$_3$/ZrO$_2$ = 0,5) obtenue par dissolution de ZrO(NO$_3$)$_2$, 2H$_2$O dans une solution de H$_2$SO$_4$ 1N.

La solution est ensuite chauffée à 90°C durant 3 heures. On obtient alors un précipité de sulfate basique de zirconium (SO$_3$/ZrO$_2$ = 0,5) formés d'agglomérats d'entités submicroniques amorphes.

Le gel est ensuite neutralisé jusqu'à ph = 8 par une solution ammoniacale. Après lavage du produit neutralisé, on obtient un hydrate de zirconium contenant 2 % de soufre.

L'hydrate est alors remis en suspension dans l'eau, puis ramené à pH 1,5 par ajout d'acide nitrique.

Le produit dispersé est ensuite mélangé à 100 g d'une solution de nitrate d'yttrium (11 % en Y$_2$O$_3$) de façon à obtenir une poudre de zircone contenant 3 % molaire en Y$_2$O$_3$.

Les conditions de sèchage et de calcination sont identiques à celles de l'exemple 1.

On obtient alors une poudre de zircone yttriée possèdant une bonne homogénéité chimique et formée de cristallites de taille comprise entre 200 et 400 Å.

Pressée sous 4t/cm², la poudre, après frittage à 1500°C durant 3 heures densifie à plus de 99 % de la densité théorique.

## Revendications

1. Procédé de préparation de poudre fine de zircone stabilisée caractérisé en ce qu'il comporte les étapes suivantes:

- on mélange, d'une part un sol d'hydrate de zircone présentant un pH compris entre 0,5 et 5 et constitué de cristallites élémentaires de ZrO₂ aciculaires de tailles comprises entre 10 et 500 Å, agglomérés en amas submicromiques ayant des tailles de 100 à 5000 Å et, d'autre part, une solution d'un sel du composé stabilisant;
- on opère ensuite le sèchage de la suspension obtenue;
- le produit séché est calciné à une température comprise entre 700°C et 1300°C pendant un temps compris entre 30 mn et 24h;
- on opère éventuellement le broyage de la poudre obtenue.

2. Procédé selon la revendication 1 caractérisé en ce que le composé stabilisant est choisi de préférence parmi le groupe constitué par l'yttrium, le calcium, le magnésium et le cérium.

3. Procédé selon la revendication 1 ou 2 caractérisé en ce que la teneur en composé stabilisant de la zircone stabilisée varie de 0,001 à 30 % molaire.

4. Procédé selon la revendication 3 caractérisé en ce que cette teneur est comprise entre 2 et 10 % molaire.

5. Procédé selon la revendication 2 caractérisé en ce que la teneur en yttrium de la zircone stabilisée est comprise entre 2 et 3 % molaire.

6. Procédé selon la revendication 1 caractérisé en ce que le séchage de la suspension est opéré de la façon suivante:

- la suspension est injectée suivant une trajectoire confondue avec l'axe de symétrie des trajectoires hélicoïdales des gaz ce qui permet de transférer parfaitement la quantité de mouvement des gaz aux particules de cette suspension,
- le temps de séjour des particules dans le réacteur est extrêmement faible, il est inférieur à 1/10 de seconde,
- la température d'entrée des gaz est comprise entre 400 et 900°C, la température du solide séché entre 100 et 500°C.

7. Procédé selon la revendication 1 caractérisé en ce que la calcination est opérée à une température comprise entre 700 et 1300°C et de préférence entre 800 et 1050°C, la durée de la calcination peut varier entre 30 minutes et 24 heures.

## Patentansprüche

1. Verfahren zur Herstellung eines feinen Pulvers von stabilisiertem Zirkoniumdioxid, dadurch gekennzeichnet, daß es die nachfolgenden Schritte umfaßt:

- man mischt einerseits ein Sol eines Zirkoniumdioxid-Hydrats mit einem pH von zwischen 0,5 und 5, das aus nadelförmigen elementaren Kristalliten von ZrO₂ mit einer Größe zwischen 10 und 500 besteht, die zu submikronischen Clustern mit einer Größe von 100 bis 5000 agglomeriert sind, und andererseits eine Lösung eines Salzes der stabilisierenden Verbindung;
- man führt dann die Trocknung der erhaltenen Suspension durch;
- das getrocknete Produkt wird bei einer Temperatur zwischen 700°C und 1300°C fur eine Zeitdauer von zwischen 30 min und 24 h calciniert;
- man nimmt gegebenenfalls eine Mahlung des erhaltenen Pulvers vor.

2. Verfahren nach Anspruch 1, dadurch gekennzeichnet, daß die stabilisierende Verbindung vorzugsweise ausgewählt wird aus der Gruppe bestehend aus: Yttrium, Calcium, Magnesium und Cer.

3. Verfahren nach Anspruch 1 oder 2, dadurch gekennzeichnet, daß der Gehalt des stabilisierten Zirkoniumdioxids an stabilisierender Verbindung von 0,001 bis 30 Mol-% variiert.

4. Verfahren nach Anspruch 3, dadurch gekennzeichnet, daß dieser Gehalt zwischen 2 und 10 Mol-% liegt.

5. Verfahren nach Anspruch 2, dadurch gekennzeichnet, daß der Gehalt des stabilisierten Zirkoniumdioxids an Yttrium zwischen 2 und 3 Mol-% liegt.

6. Verfahren nach Anspruch 1, dadurch gekennzeichnet, daß die Trocknung der Suspension auf folgende Art durchgeführt wird:

- die Suspension wird entlang einer Bahn eingespritzt, die zusammenfällt mit der Symmetrieachse der helikoidalen Bahnen der Gase, so daß es möglich ist, die Triebkraft der Gase vollständig auf die Partikel dieser Suspension zu übertragen,
- die Aufenthaltsdauer der Partikel im Reaktor ist extrem kurz und liegt unterhalb von einer zehntel Sekunde,
- die Eintrittstemperatur der Gase liegt zwischen 400 und 900°C, die Temperatur des getrockneten Feststoffs zwischen 100 und 500°C.

7. Verfahren nach Anspruch 1, dadurch gekennzeichnet, daß die Calcinierung bei einer Temperatur zwischen 700 und 1300°C und vorzugsweise zwischen 800 und 1050°C durchgeführt wird, wobei die Dauer der Calcinierung zwischen 30 min und 24 h variiert.

## Claims

1. Process for the preparation of a fine powder of stabilized zirconia, characterized in that it comprises the following stages:

- a mixture is prepared from, on the one hand, a hydrated zirconia sol having a pH of between 0.5 and 5 and consisting of elementary crystallites of acicular $ZrO_2$ of sizes between 10 and 500 Å, agglomerated to form submicron masses having sizes of 100 to 5,000 Å and, on the other hand, a solution of a salt of the stabilizing compound;
- thereafter, the suspension obtained is dried;
- the dried product is calcined at a temperature of between 700°C and 1300°C for a time of between 30 minutes and 24 hours; and
- optionally, the powder obtained is ground.

2. Process according to claim 1, characterized in that the stabilizing compound is preferably chosen from among the group consisting of yttrium, calcium, magnesium and cerium.

3. Process according to claim 1 or 2, characterized in that the content of stabilizing compound in the stabilized zirconia varies between 0.001 and 30 mole-%.

4. Process according to claim 3, characterized in that this content is between 2 and 10 mole-%.

5. Process according to claim 2, characterized in that the yttrium content of the stabilized zirconia is between 2 and 3 mole-%.

6. Process according to claim 1, characterized in that the drying of the suspension is carried out as follows:

- the suspension is injected along a path which coincides with the axis of symmetry of the spiral paths of the gases, which permits perfect transfer of the amount of movement of the gases to the particles of this suspension,
- the dwell time of the particles in the reactor is extremely low, namely less than 1/10 of a second,
- the entry temperature of the gases is between 400 and 900°C and the temperature of the dried solid is between 100 and 500°C.

7. Process according to claim 1, characterized in that the calcination is carried out at a temperature of between 700 and 1300°C and preferably between 800 and 1050°C and that the duration of calcination can vary between 30 minutes and 24 hours.